Europäisches Patentamt

European Patent Office

Office européen des brevets

(11) Publication number: **0 219 197**
**A2**

## (12) EUROPEAN PATENT APPLICATION

(21) Application number: 86305825.1

(51) Int. Cl.⁴: **G06F 15/40**

(22) Date of filing: 29.07.86

The title of the invention has been amended (Guidelines for Examination in the EPO, A-III, 7.3).

(30) Priority: 29.07.85 JP 167267/85

(43) Date of publication of application:
**22.04.87 Bulletin 87/17**

(84) Designated Contracting States:
**CH DE GB LI**

(71) Applicant: **SEIKO INSTRUMENTS & ELECTRONICS LTD.**
**31-1, Kameido 6-chome**
**Koto-ku Tokyo 136(JP)**

(72) Inventor: **Shigeki, Yagi c/o Seiko Instr. & Electronics Ltd.**
**31-1, Kameido 6-chome**
**Koto-ku Tokyo(JP)**

(74) Representative: **Caro, William Egerton et al**
**J. MILLER & CO. Lincoln House 296-302 High Holborn**
**London WC1V 7JH(GB)**

(54) **Portable information storage device.**

(57) A portable information device comprises: key input means (1); at least two memory means (21,22) each storing a category of information; memory selecting means (3) for selecting one of the memory means in accordance with the output of the key input means; reference address designating means (4) for designating the address of stored information to be referred to in the memory means; search address designating means (5) selected, when specified stored information is to be searched, for designating the address of the stored information to be searched for in the memory means; reference information temporary memory means (6) for temporarily storing information to be referred to; key word discriminating means (7) for discriminating whether or not a specified key word is contained in the stored information being referred to to instruct the memory selecting means to select the memory means corresponding to the key word; compared information temporary memory means (8) for temporarily storing information to be searched; comparing means (9) for comparing the content of the compared information temporary memory means and the content of the memory means, which is to be addressed by the search address designating means, to interrupt the operation of the search address designating means, when the two contents compared coincide, and to send out the coinciding information to the reference information temporary memory means; and display means (10) for displaying the content of the reference information temporary memory means.

FIG.1

# PORTABLE INFORMATION DEVICE

This invention relates to portable information devices for electrically storing information.

In known portable information devices such as wrist watches or electronic note books, it is current practice to process stored contents such as - schedule information or telephone number information in accordance with a menu system which is used when schedule information or telephone number information is to be stored or when the stored information is to be referred to. Moreover, known information devices have a search function to effect prompt searching for desired stored telephone number information, for example.

This known portable information device is capable only of searching, in one mode, the category of information as is administered in that mode. In the schedule mode, for example, nothing but - schedule information is searched. If, however, it is required, in the schedule mode, to know a telephone number related to the schedule information being referred to, the user must leave the schedule mode, enter the telephone number mode and then search for the desired telephone number. This operation is troublesome.

The present invention seeks to provide a portable information device where it is possible to search stored information in one mode that intrinsically cannot be referred to in another mode.

According to one aspect of the present invention there is provided a portable information device comprising: key input means; at least two memory means each storing a category of information; memory selecting means for selecting one of said memory means in accordance with the output of said key input means; reference address designating means for designating the address of stored information to be referred to in said memory means; search address designating means selected, when specified stored information is to be searched, for designating the address of the stored information to be searched for in said memory means; reference information temporary memory means for temporarily storing information to be referred to; key word discriminating means for discriminating whether or not a specified key word is contained in the stored information being referred to to instruct said memory selecting means to select the memory means corresponding to the key word; compared information temporary memory means for temporarily storing information to be searched, comparing means for comparing the content of said compared information temporary memory means and the content of said memory means, which is to be addressed by said search address designating means, to interrupt the operation of said search address designating means when the two contents compared coincide, and to send out said coinciding information to said reference information temporary memory means; and display means for displaying the content of said reference information temporary memory means.

According to another aspect of the present invention there is provided a portable information device comprising: at least two memory means each storing a category of information; memory selecting means for selecting one of the memory means to display selected information contained therein; and means for obtaining information from the or one of the other memory means related to the selected information.

The invention is illustrated, merely by way of example, in the accompanying drawings, in which:-

Figure 1 is a detailed block diagram of a portable information device according to the present invention;

Figure 2 is a basic block diagram showing one embodiment of a portable information device according to the present invention;

and

Figures 3 and 4 are flow charts illustrating operation of a portable information device according to the present invention.

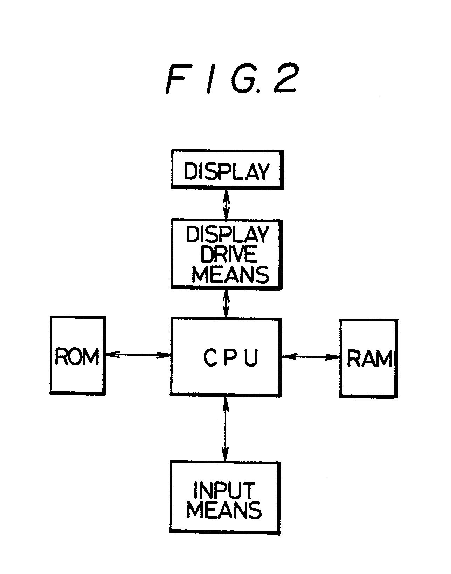

Figure 2 is a basic block diagram of a portable information device according to the present invention. This portable information device comprises a ROM for storing a program, a RAM for storing information and a CPU for controlling the ROM and RAM to provide information to a display drive means which drives the display device.

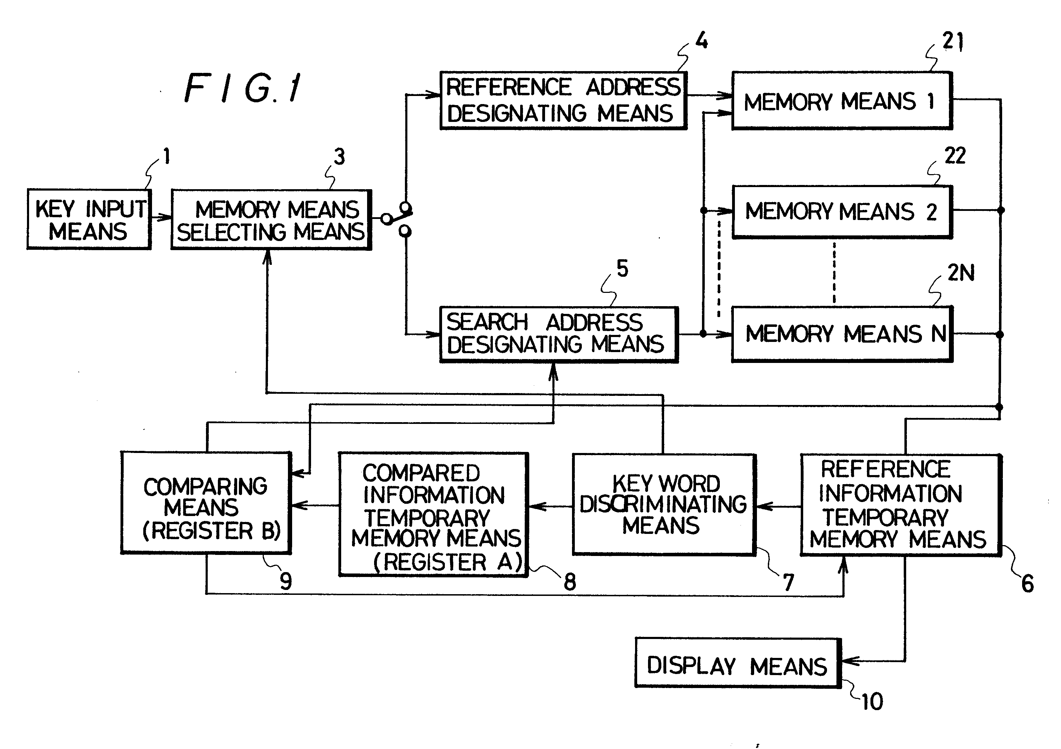

Figure 1 shows the portable information device of Figure 2 in greater detail. It is assumed that the memory circuitry contains information stored in advance by an operator. A specific example of stored information in a memory 21 is "PM 4:00 TEL YAMADA" implying that Mr. Yamada is to be telephoned at 4.00 P.M. It is also assumed that the memory 21 contains other information of similar kind which will be referred to as scheduled information. A memory means 22 contains telephone number information and it will be assumed that amongst the telephone number information is the telephone number of Mr. Yamada. A reference address designating means 4 designates addresses of stored information in the memory means 21.

In the known portable information device, the two memory means 21,22 would be independent of each other so that the schedule information and the telephone number information can only be referred to indepedently in a schedule mode and a telephone mode. As a result, if the telephone number of Mr. Yamada is required while the schedule information that Mr. Yamada is to be telephoned at 4.00 P.M. is displayed, the following procedure has to be followed: leave the schedule mode, enter the telephone number mode, and then search the telephone number of Mr. Yamada.

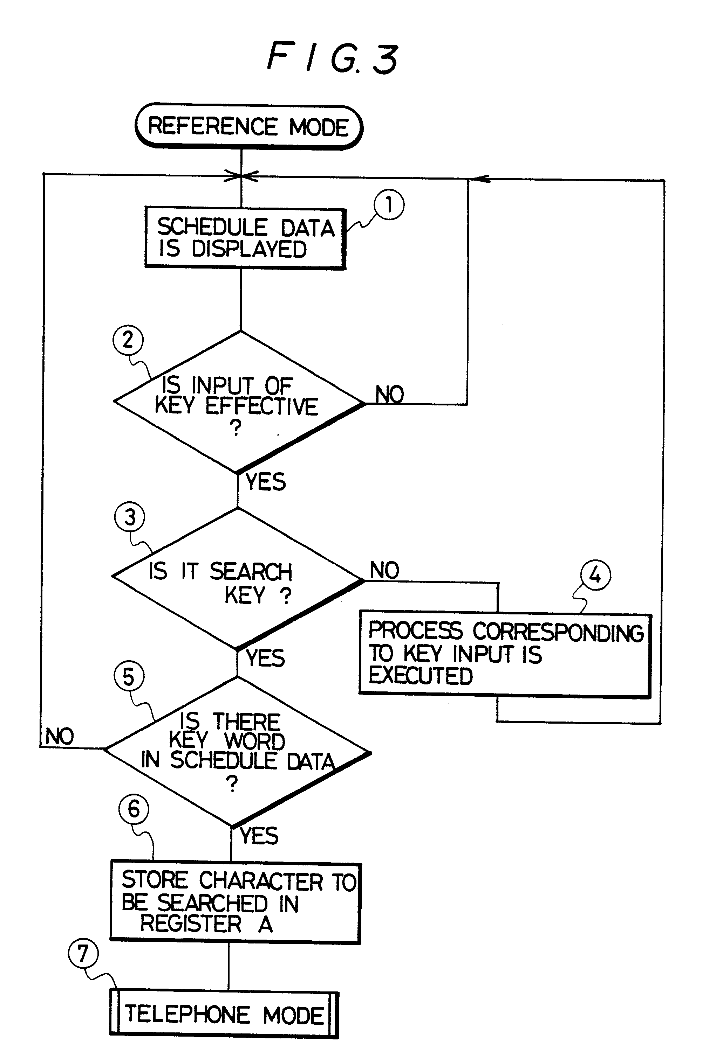

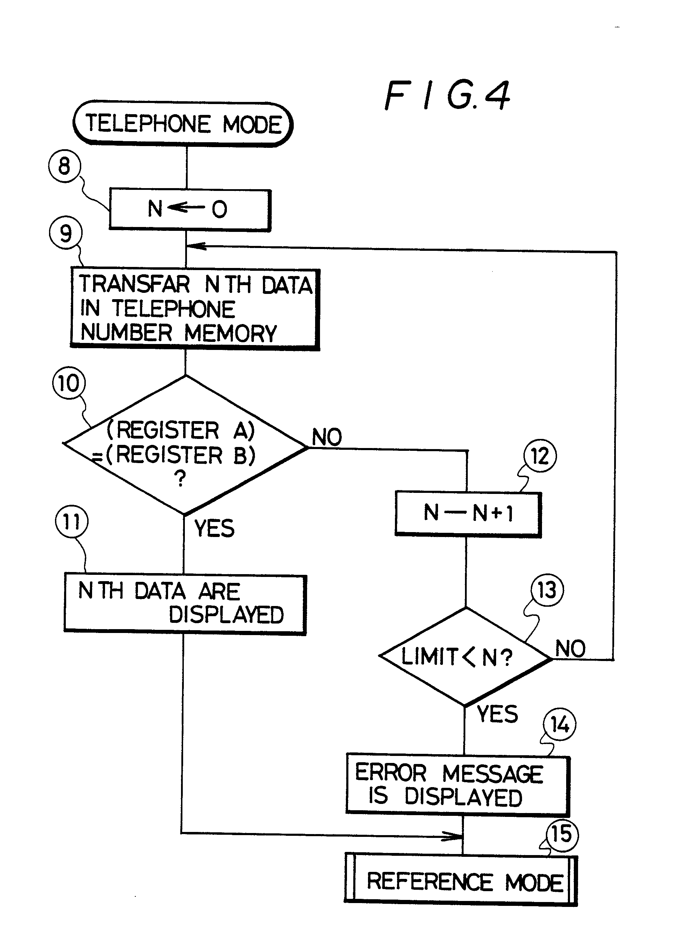

In the portable information device of Figures 1 and 2, the desired telephone number can be referred to in the schedule mode without the need for any of the aforementioned complicated operations. This is achieved by depressing a "search" key, i.e. one of the key input means 1, while the schedule information is being referred to. This simple operation will be described in detail with reference to the flow charts shown in Figures 3 and 4.

If the "search" key is depressed while schedule information is displayed (at step 1 of Figure 3), the content stored in a reference information temporary memory means 6 is fed to a key word discriminating means 7 (at a step 3 of Figure 3). Let it be assumed in this embodiment that the word "TEL" is a key word, the key word discriminating means 7 detects the word "TEL" in "PM 4:00 TEL YAMADA" and causes a memory means selecting means 3 to select the memory means 21 in which is stored telephone number information, to be processed (at a step 7 of Figure 3). Simultaneously with this, the information "YAMADA" following the key word "TEL" is sent to a compared information temporary memory means 8 (at a step 6 of Figure 3) so that it may be searched. The content of the telephone number memory means 22 selected by the memory means selecting means 3 is sequentially read out in accordance with a search address designating means 5 and is compared with the information content in the compared information temporary memory means 8 (at a repetition of steps 8, 9, 10, 12, 13 of Figure 4). When coincidence is found between the two information contents, a comparing means 9 operates the reference information temporary memory means 6, whereupon the content of the memory means 22 to be addressed by the search address designating means 5 is displayed by display means 10 (at a step 11 of Figure 4). If no coincidence is found as a result of comparison with all the information in the memory means 22, an error message is displayed by the display means 10 (at a step 14 of Figure 4).

The portable information device of Figure 1 has been described in relation to two information categories such as schedule information and telephone number information. However, it is not limited thereto but can naturally be applied similarly to other information categories such as diagrams of trams (street cars) or motor buses or mere memoranda. Moreover, a plurality of memory means may be provided for storing three or more information categories.

The portable information device according to the present invention and described above enables reference to be made to information from various categories when in another reference mode so that a greater amount of information can be extracted by relatively very simple operations.

## Claims

1. A portable information device comprising: key input means (1); at least two memory means - (21,22) each storing a category of information; memory selecting means (3) for selecting one of said memory means in accordance with the output of said key input means; reference address designating means (4) for designating the address of stored information to be referred to in said memory means; search address designating means (5) selected, when specified stored information is to be searched, for designating the address of the stored information to be searched for in said memory means, reference information temporary memory means (6) for temporarily storing information to be referred to; key word discriminating means (7) for discriminating whether or not a specified key word is contained in the stored information being referred to to instruct said memory selecting means to select the memory means corresponding to the key word; compared information temporary memory means (8) for temporarily storing information to be searched; comparing means (9) for comparing the content of said compared information temporary memory means and the content of said memory means, which is to be addressed by said search address designating means, to interrupt the operation of said search address designating means when the two contents compared coincide, and to send out said coinciding information to said reference information temporary memory means; and display means (10) for displaying the content of said reference information temporary memory means.

2. A portable information device comprising: at least two memory means (21,22) each storing a category of information; memory selecting means - (3) for selecting one of the memory means to display selected information contained therein; and means (6 to 9) for obtaining information from the or one of the other memory means related to the selected information.

3. A portable information device comprising: a) key input means; b) at least two memory means for storing numbers, letters and symbols; c) memory means selecting means for selecting such one of said memory means as is to be processed in accordance with the output of said key input means; d) reference address designating means for designating the address of a stored content to be referred to for said memory means; e) search address designating means adapted to be selected, when a specified stored content is to be searched, for designating the address of the stored content to be searched for said memory means; f) reference information temporary memory means for temporarily storing information to be referred to; g) key word discriminating means for discriminating whether or not a specified key word is contained in the stored content being referred to instruct said memory means selecting means to select the memory means when the key word is contained;

h) compared information temporary memory means for temporarily storing at least one letter, numeral and symbol to be searched; i) comparing means for comparing, when in the searching operation, the content of said compared information temporary memory means and the content of said memory means, which is to be addressed by said search address designating means, to interrupt the operation of said search address designating means, when the two contents compared are coincident, and to send out said coincidence information to said reference information temporary memory means; and j) display means for displaying the content of said reference information temporary memory means.

FIG.1

KEY INPUT MEANS — 1

MEMORY MEANS SELECTING MEANS — 3

REFERENCE ADDRESS DESIGNATING MEANS — 4

MEMORY MEANS 1 — 21

MEMORY MEANS 2 — 22

MEMORY MEANS N — 2N

SEARCH ADDRESS DESIGNATING MEANS — 5

COMPARING MEANS (REGISTER B) — 9

COMPARED INFORMATION TEMPORARY MEMORY MEANS (REGISTER A) — 8

KEY WORD DISCRIMINATING MEANS — 7

REFERENCE INFORMATION TEMPORARY MEMORY MEANS — 6

DISPLAY MEANS — 10

0 219 197

# F I G. 2

# F I G. 3

```
        ( REFERENCE MODE )
                │
                ▼
    ①  ┌──────────────────┐
       │ SCHEDULE DATA    │
       │ IS DISPLAYED     │
       └──────────────────┘
                │
                ▼
    ②        ◇
         IS INPUT OF ───── NO
         KEY EFFECTIVE ?
              │ YES
              ▼
    ③        ◇
         IS IT SEARCH ──── NO ──┐
            KEY ?               │  ④ ┌────────────────────┐
              │ YES                 │ PROCESS CORRESPONDING│
              ▼                     │ TO KEY INPUT IS      │
    ⑤        ◇                      │ EXECUTED             │
   NO ─── IS THERE                  └────────────────────┘
          KEY WORD
          IN SCHEDULE DATA ?
              │ YES
              ▼
    ⑥ ┌──────────────────┐
      │ STORE CHARACTER TO│
      │ BE SEARCHED IN    │
      │ REGISTER A        │
      └──────────────────┘
              │
              ▼
    ⑦ ┌──────────────────┐
      │ TELEPHONE MODE   │
      └──────────────────┘
```

# F I G.4

Flowchart:

TELEPHONE MODE

(8) N ← O

(9) TRANSFAR N TH DATA IN TELEPHONE NUMBER MEMORY

(10) (REGISTER A) = (REGISTER B) ?

NO → (12) N — N+1 → (13) LIMIT < N?

NO → (back to 9)

YES → (14) ERROR MESSAGE IS DISPLAYED

(11) YES → N TH DATA ARE DISPLAYED

(15) REFERENCE MODE